# EUROPEAN PATENT APPLICATION

(11) **EP 4 520 174 A1**
(43) Date of publication of application: **12.03.2025**
(21) Application number: 24198687.6
(22) Date of filing: 05.09.2024
(51) Int. Cl.: A21C 15/00

(54) **SEMI-AUTOMATIC DEVICE FOR FILLING ROLLS WITH SEMI-LIQUID FILLING AND METHOD OF FILLING ROLLS**

(30) Priority: 05.09.2023 CZ 20230341
(71) Applicant: Premier Food s.r.o., 110 00 Praha 1 (CZ)
(72) Inventor: NÁDVORNÍK, Luká, CZ 252 28 erno ice (CZ)
(74) Representative: Hak, Roman

(57) **Abstract**

The invention relates to a device for semi-automatic preparation of filled rolls, which are mainly filled with a warm semi-liquid filling. The device enables the filling of rolls with specially prepared dishes that have not yet been used in the form of fast food, such as traditional Czech dishes. Cartridges for one portion of filling are used to fill the roll. The roll filling machine comprises the basic components which are two-axis manipulator, i.e. x-z gripper drive system, heating unit, pushing unit, filling unit and control unit. The manipulator, the heating unit, the extrusion unit and the filling unit are arranged in a housing, where they are spatially distributed and functionally connected in such a way that the device realizes the movement of the cartridge held in the gripper between the initial position, the heating unit, the pushing unit and the filling unit. The device according to the invention finds its application especially in fast food establishments.

## Description

### Field of the Invention

The present invention generally relates to the field of gastronomy, specifically to a device for fast food preparation. In particular, it relates to a device for semi-automatic preparation of filled rolls, which are filled mainly with warm semi-liquid filling.

### Prior Art

Fast food is a type of public catering based on quick selection, sale and consumption of food. As a rule, these are dishes that are suitable by their nature for quick preparation, and it is usually also possible to eat them without cutlery and dishes, from paper packaging or by hand, possibly while standing or even while walking.

Typical foods served in fast food establishments include a hamburger, hot dog, sausage in a roll, kebab, gyros, portions of grilled or fried chicken, or pizza. Kebabs, gyros and pizza were originally dishes typical of specific areas (the Middle East, Greece, Italy), but due to their easy preparation, they have spread practically all over the world, especially in fast food establishments.

The dishes are usually prepared in the traditional way, by grilling, baking, deep-frying, boiling or simply heating, when the processed meat is usually stuffed into some form of bakery product, such as a roll, tortilla or pita bread. The preparation of such dishes requires human service, and semi-automatic or automatic operations do not normally work yet.

A "hot dog" is a dish originating in the USA consisting of a heated or grilled sausage that is placed in a roll, bun or baguette cut lengthwise. It is usually seasoned with mustard, ketchup, mayonnaise, as well as garnish - onion, lettuce or cabbage, pickled cucumber. A sausage in a roll is a Czech version of a hot dog, it consists of a heated (sometimes also grilled) sausage, or other similar wurst, which is placed inside a roll. Unlike other types of hot dog, the bakery product is not cut, but one tip is removed and an elongated hollow is formed in the rest by a toasting spike, and the sausage, usually seasoned with mustard or ketchup, is inserted into the hollow. Commercially available devices basically consist of an electrically heated toasting spike and a container for heating sausages. The preparation and sale of hot dogs and sausages in a roll have not been automated in any way and require full human service.

Patent US 5,172,328 B1 discloses a fully automated robotic "fast food" system suitable for preparing fries, chicken nuggets, fish fillets or hamburgers. International patent application WO 03/047356 A1 discloses an automatic device for preparing a kebab. European patent EP 2 134 183 B1 discloses an automatic system for preparing and serving pizza. Patent US 11,089,905 B2 discloses an automated system for serving and baking rolls/buns usable in fast food establishments for the preparation of hamburgers.

The Czech or Central European cuisine has not contributed much to fast food so far, mainly because traditional dishes such as goulash, tomato or dill sauce, sirloin beef, etc., did not seem suitable for quick preparation in fast food establishments and convenient consumption without cutlery.

A specific feature of fast food is the requirement for the consistency of the prepared foods, which must be prepared under precisely defined conditions for a precisely determined time, as well as for their safety, i.e. complete health harmlessness.

An alternative to current types of fast food and a solution to some problems is offered by the device for filling rolls with semi-liquid mixture. The device enables the filling of rolls with specially prepared dishes not used in fast food so far, for example traditional Czech dishes, in a fast, semi-automated manner, suitable for fast food establishments. The device uses a cartridge for one portion of filling, preferably a cartridge that was disclosed in the CZ patent application PV 2022-311. The resulting dish, a filled roll, meets the requirements for a fast food dish and thus expands the range of dishes offered so far.

### Summary of the Invention

The device according to the present invention is intended for use in the field of gastronomy and it will find its application specifically in fast food establishments. The pre-prepared semi-liquid filling (filling mixture) is filled, using the device according to the invention, into a pre-baked roll just before consumption, similar to the Czech/European version of a hot dog (sausage in a roll), where the roll is not cut, but the tip is cut off and the hollow for the sausage is created by hitting the roll on a toasting spike (optionally, a special roll can be used - a semi-finished product with a pre-formed cavity). The prepared dish is therefore similar to a sausage in a roll, but instead of a sausage, it contains a pre-prepared, especially cooked filling, which mainly consists of a modified dish of "traditional" Czech (but also other national) cuisine, such as e.g. goulash, chicken with paprika, corned beef rolls, tomato sauce with beef or sirloin beef on cream.

The preparation of the filling requires modification of the traditional recipe, as the filling must have certain specific properties, especially density. The consistency of the filling is similar to a thick sauce, as is usually known for e.g. sirloin beef. The filling may contain pieces of meat, eggs and vegetables, which should not exceed approximately 1 cm³ in size. High demands are placed on the stability of the consistency and density (sauce / solid parts) of individual specific fillings. These fillings are filled one portion at a time (preferably with a volume of 75 ml) into special cartridges, in which they are also stored in the refrigerator for a short time before consumption, and just before consumption, they are heated as needed and filled into a pre-prepared roll using the device according to the invention. The use of cartridges in the device according to the invention guarantees not only the standard filling of the roll, but especially the health harmlessness of the process of storing, heating and filling. The cartridge for one portion of the filling is an elongated cylindrical container with an outer diameter corresponding to the cavity of the roll, which is equipped at one end with an easily openable cap, preferably a cracking cap, and at the other end with a movable lid with the function of a piston, which allows the filling to be pushed out. The internal volume of the cartridge corresponds to the volume of one filling of a roll (e.g. preferably 75 ml). The cartridge is provided with at least one element on its outer shell, e.g. a rim, a protrusion, a recess, which enables it to be caught by the gripper of the manipulator in the device for filling rolls.

In this description, the term "roll" means both a regular roll, but especially a special bakery product adapted for filling, essentially known from the state of the art. Advantageously, special bakery products are prepared for use in the device according to the invention, already pretreated in the bakery so that they are calibrated in terms of weight and size (length and diameter), do not have one tip and contain an elongated cavity (in the direction of the longer axis of the roll) which is open at the end without a tip. Advantageously, the dough recipe is also adjusted so that it does not get soggy quickly after filling the semi-liquid filling. In the description of the invention, the term "semi-liquid" filling means in particular a filling with a consistency ranging from a thick soup to a thick sauce to a thin porridge, which contains a liquid component and larger solid pieces, with the volume of an individual piece usually up to 1 cm³. The term semi-liquid filling according to the invention includes not only the above-mentioned "classic" sauces, but also, for example, pasty dishes such as hummus or spreads (e.g. from cottage cheese, tuna, shrimp, avocado) or meaty dishes such as pâtés or rillettes, as well as vegetable salad (a mixture of pieces of various types of vegetables, or pieces of meat, and a thick, or gel-like, dressing - a dressing made of e.g. yogurt, cream, mayonnaise, mustard, balsamic vinegar).

The preparation of a roll before filling usually consists of inserting it onto a toasting spike and toasting the inside of the roll and roasting (grilling) the outside of the roll in a contact grill, which is not part of the device according to the invention. The preparation of a roll, its placement in the device for filling and removal and serving to the customer are performed by the operating staff. In the same way, the removal of the cartridge with filling from the refrigerator, which is not part of the device according to the invention, and its insertion into the device, is performed by the operating staff.

### DEVICE FOR FILLING ROLLS

The device for filling rolls according to the present invention comprises the basic components, which are: a two-axis manipulator, i.e. an *x-z* drive system with a gripper, a heating unit, a pushing unit, a filling unit, a control unit and an electrical switchboard. The components are functionally arranged in a housing, which is a self-supporting frame structure, preferably sheathed. In the upper part of the housing (when viewed from the front) there is a manipulator with a gripper (fork), which is adapted to grasp the cartridge, in the initial position (i.e. the position for inserting the cartridge) at the top left (above the heating unit). The longitudinal axis of the cartridge held in the gripper of the manipulator lies in the *xz* plane. The gripper with the cartridge moves to the right for filling the roll (movement in the x axis) and moves up/down during the actual filling (movement in the z axis). At the bottom left (i.e. below the starting position of the manipulator's gripper) is the heating unit. To the right of the heating unit is the filling unit, which is adapted for vertical movement up/down and in which there is a disposing pit, possibly connected to the disposing opening for removing the used cartridge. Above the filling unit there is a free handling space into which the gripper with the cartridge can be moved. Above this handling space is a pushing unit with an ejector piston that is adapted for vertical up/down movement (z-axis movement). The components are spatially distributed and functionally connected in such a way that the gripper of the manipulator (after inserting the cartridge by the operator) inserts the cartridge downwards into the heating unit, pulls out the cartridge (after heating) from the heating unit and moves it above the impaling spike (advantageously located on the lid of the heating unit), it moves down so that the impaling spike impales the cracking cap (to facilitate the opening of the cap when filling the roll), and then it moves to the position for filling the roll, that is, to the position above the toasted roll (which was previously inserted there by the operator) in the filling unit and under the piston of the pushing unit. Subsequently, the piston of the pushing unit moves downwards, while simultaneously moving the cartridge upwards, pushes the filling out from the cartridge into the roll, and the gripper moves the empty cartridge above the disposing pit, where it is dropped (cartridges are advantageously recycled) and returns to the initial position above the heating unit. The gripper of the manipulator moves only in two axes, horizontal (x) and vertical (z), i.e. in the *xz* plane.

The electrical switchboard is advantageously located in the rear part of the housing. The control unit is usually also located in the rear part of the housing, and it may optionally contain several sub-units, at least one of which, the one containing the control panel and/or communication interface, is located on the front wall of the housing.

### Manipulator

It is an automated x-z drive system with a gripper adapted for grabbing the cartridge, which has movements defined by the control program: from the initial (rest) position above the heating unit it moves down, places the cartridge to the heating unit, moves the cartridge to right above the impaling spike and moves down so that the spike disrupts the cracking cap, moves up and more to the right above the filling unit (above the filling opening in the filling unit), then it inserts the cartridge downwards into the cavity of the roll and then rises (with the simultaneous coordinated downward movement of the piston of the pushing unit, the filling is pushed out of the cartridge into the cavity of the roll), then moves the empty cartridge above the disposing pitand the gripper releases the cartridge, which falls through the disposing pit and the disposing opening and falls into the collection container located under the bottom of the device (the collection container may or may not be part of the device) and finally the gripper moves to the starting position above the heating unit.

In the front wall of the housing, there is a first door that communicates with the device space, where the manipulator gripper is located in the initial position, and allows a cartridge with filling to be inserted into the gripper. The door contains a safety magnet, which disconnects the power supply to the motors when the door is open, a magnet for fixing the closed door and possibly a latch for a lock. The mentioned components are also included in the second and third doors mentioned below.

### Heating unit

The heating unit contains a case (e.g. in the shape of a cuboid) which preferably contains a removable (in the front-to-back direction) container with a water bath, where water is heated to a temperature of approximately 95 °C by means of an electric heating element located in the bottom of the case. The temperature of the water bath is measured by a temperature sensor (e.g. thermocouple, thermistor, infrared thermometer) and is controlled by the control unit and thermostat. The container is closed with a lid, preferably liftable, so that there is as little evaporation of water as possible, the lid contains an opening for inserting the cartridge into the water bath. The opening is covered with silicone flaps - squeegees, which wipe water drops from the surface of the cartridge when the cartridge is removed from the bath and also help prevent water evaporation. The cartridge remains in the bath for such a period of time that the contents of the cartridge are heated to the minimum required temperature of 65 °C or higher. The heating time depends on the material and design of the cartridge, on the heating method (water bath, induction, microwaves) and the type of filling, but it usually represents 30 to 60 seconds.

In a preferred embodiment, an impaling spike is installed in the lid of the water bath container. The impaling spike is used to mechanically pierce the centre of the cracking cap of the cartridge, which will facilitate the full opening of the cap under the pressure of the piston of the pushing unit. The impaling spike is placed in a circular sleeve that extends into the water bath, so that the spike is continuously heated by the water bath to the temperature of the water bath (approximately 95 °C) to ensure the hygiene of the spike. The portion of the spike that pierces the cracking cap is constructed from two intersecting, mutually perpendicular isosceles triangles where the vertices between the arms form the impaling tip. The tip is preferably made of food-grade stainless steel, as is the cartridge.

In a preferred embodiment, a float is installed in the lid of the water bath container for easy visual detection of the water level in the container. The water level in the container can also be detected by a number of other methods and sensors known to a skilled person.

A heating unit with a water bath is one of the preferred embodiments; other preferred embodiments include heating units with induction heating (for a steel cartridge) or with microwave heating (for a plastic cartridge).

There is also a second door in the front wall of the housing, which communicates with the space of the heating unit and enables the insertion/removal of the container with the water bath. The second door is equipped with magnets or a latch, as described for the first door.

### Pushing unit

The pushing unit is located above the filling unit and contains an ejection piston attached to the stand, vertically movable, adapted to be moved from the initial upper (rest) position downwards, to be inserted into the cartridge to push out the filling, to the lower (end) position, where the pushing out of the filling from the cartridge is finished. When the filling is pushed out and the piston moves downwards, the cartridge is simultaneously pulled up by the gripper of the manipulator, so that the filling is quickly pushed out into the roll. The movement of the piston is ensured by a servomotor, which is controlled by the control unit ("driver").

### Filling unit

The filling unit comprises a case (e.g. in the shape of a cuboid) which is vertically movable and contains a roll holder with a roll handle, and further comprises a detector of the presence of a roll in place. The case can move between the upper position for inserting/removing the roll, where it is aligned with the third door in the front wall of the housing, and the lower position, where the filling takes place. The roll holder is extendable in the front-back direction as a "drawer". It is extended/retracted manually by the operator, making it easier to insert the roll into the holder and to remove it, and also allows for better sanitation of the unit space. Inserting the roll after toasting and removing it after filling is ensured by the operator.

Furthermore, a disposing pit is advantageously arranged in the case, into which the cartridge is lowered after the filling has been pushed out of it. The disposing pit can connect to the disposing opening in the bottom of the housing, through which the cartridge falls into the collection container located under the bottom of the housing. In an alternative embodiment, the disposing pit is provided with a bottom, so that the cartridge remains in it after being disposed and is removed by the operator through the third door.

In an alternative embodiment, an impaling spike may be placed on the upper surface of the case. Its design is similar to that described above, but heating to a temperature of at least 65 °C must in this case be ensured by an electric heating element and the temperature regulated electronically using a thermostat.

There is a third door in the front wall of the device that communicates with the filling unit in the upper position and allows the roll to be inserted/removed. The third door is equipped with magnets or a latch, as described for the first door.

The movement of the filling unit is ensured by rodless cylinders and is controlled by the control unit.

### Housing

The base of the housing is a self-supporting frame structure. It includes, for example, a frame made of metal, preferably steel or aluminium, profiles (square or rectangular cross-section, or L or U profile), connected by welding or screwing. It contains suitable mounts for mounting the manipulator, heating unit, pushing unit and filling unit. The housing is provided with a panelling/sheathing, preferably from panels made of plastic (e.g. plexiglass or macrolon) or e.g. sheet metal, which are attached to the frame. The housing fully encloses all of the above components, creating a compact device. The front wall is equipped with three doors, the first door for inserting the cartridge, the second door for inserting/removing the water bath container and the third door for inserting/removing the roll. The housing can also contain additional doors, as needed, allowing access to e.g. the motor, control unit or other components without disassembling the cabinet sheathing. The doors are arranged in the front wall of the housing in such a way that when all doors are opened at the same time, a large access opening is created, which allows good access to the internal components, especially for cleaning and maintenance. At least one wall of the cabinet, preferably the front wall with doors, is equipped with an interface for controlling the device and for communication between the operator and the control unit, preferably with a touch screen, or it also contains indicator lights, switches and regulators (e.g. main switch, bath temperature indicator, emergency control of manipulator and piston movement, etc.). The bottom of the housing can advantageously contain a disposing opening for throwing cartridges after use into a collection container located under the housing.

### Electrical switchboard

The electrical switchboard is located in the rear part of the device and ensures the connection to the electrical network and the power supply of all components of the device.

### Control unit

The control unit, which may be an assembly of multiple sub-units, includes a processor, a memory and a communication interface (e.g. a touch screen), where the processor is configured at least to receive input data from a memory (program instructions) and/or a communication device (instructions to start a cycle) and/or detectors (optical sensor - detector of the presence of a roll, door opening/closing detection by means of a magnet) and issue instructions at least for the control elements (servomotors or stepper motors) of the manipulator (movement in the *x-z* plane, closing/opening the gripper arms), filling unit (movement of the piston up/down, i.e. in the z-axis direction).

### Collection container for used cartridges

The collection container for used cartridges is, in one embodiment, a box placed under the device, or under the disposing opening in the bottom of the device's housing. After filling the roll, the manipulator transfers the used cartridge over the disposing pit and releases the cartridge so that it falls through the disposing pit and opening into the collection container. The collection container may be part of the device or it may be any suitable container placed under the device.

In another embodiment, the pit is blinded, or it contains a bottom, so it fulfils the function of a collection container. The cartridge is then removed manually through the third door.

All the above-mentioned components of the device are known in principle and a skilled person is able to construct them or their analogues on the basis of the given descriptions and their knowledge. The inventor considers the entire device as new and inventive, i.e. the functional assembly of the above-mentioned components, which works as a semi-automatic device for filling rolls with a semi-liquid filling and cooperates with a cartridge for one portion of the filling.

### CARTRIDGE FOR ONE PORTION OF FILLING

The cooked or otherwise prepared filling mixture, according to a given recipe, is filled into a temporary container - a cartridge. The cartridge is an essential element for the operation of the device, the use of cartridges in the device according to the invention guarantees not only the standard filling of a roll, but especially the health harmlessness of the process of storing and filling. A cartridge is generally a cylindrical container that has an outer diameter corresponding to the diameter of the cavity in the roll and that holds one portion of the filling (e.g. 75 ml volume). The cartridge is closed at one end by a cap that is fixed but can be easily disturbed mechanically (see e.g. the cracking cap described below) and at the other end it is closed by a movable cap with the function of a piston, which pushes the filling out when it is pressed by a piston of the pushing unit. On the outer surface, closer to the end closed by the piston, it is equipped with a gripping element (e.g. a groove, protrusions, etc.), whereby it is adapted so that it can be attached to the manipulator's gripper. The cartridge can be designed for single use or preferably for repeated use.

The cartridge must be made of a harmless material suitable for food purposes, which is resistant to a temperature of at least 100 °C. Metals or various plastics or bioplastics are considered (especially if the cartridge is intended for single use), but for a recyclable cartridge (i.e. intended for repeated use) stainless steel certified for food contact seems to be the most suitable material, for reasons of durability during repeated use, dimensional stability, and compliance with hygiene requirements. Advantageous materials include, for example, stainless steel of quality 1.4301 (so-called food grade steel) or steels marked AISI 316 L, AISI 304 and ANSI 303.

A cartridge suitable for the device according to the present invention was described in the CZ patent application PV 2022-311. Considering that the device according to the invention is intended for cooperation with a cartridge for one portion of filling, the advantageous design of the cartridge will also be described in more detail in this application.

In an advantageous embodiment, the cartridge contains three basic parts: the body, the piston and the cracking cap.

In a preferred embodiment, the body of the cartridge is a machined tube, preferably a seamless tube made of stainless steel, dimensionally adapted for insertion into the roll and for inserting the required volume of filling. The cartridge at the first end contains a recess (internal groove) for seating the piston with a stopping edge for the piston. The recess continues towards the other end of the cartridge with a gradual transition into the standard diameter of the inside of the cartridge (i.e. without an edge). The inner end edge is advantageously bevelled. At this end, a means for grasping the cartridge with the gripper of the manipulator is also located from the outside. It can be a rim, protrusions, a partial recess or a recess around the entire circumference of the cartridge. Advantageously, this means is a recess (groove) along the entire outer circumference of the cartridge, the profile of the recess being rectangular and its dimensions adapted to the manipulator's gripper jaws. At the second end of the cartridge, there is a recess, and optionally an enlarged inner diameter, for attaching the cracking cap. The inner end edges of the second end are advantageously slightly bevelled, which allows for a more convenient insertion of the cap.

The cartridge piston is a circular cylinder made of food-grade silicone, with a diameter corresponding to the inner diameter of the cartridge body so that it can move in the cartridge body, but at the same time tight enough so that when the filling is pushed out of the cartridge, the filling does not flow over the cartridge piston. Prior to filling the cartridge, the piston is seated inside the cartridge in the recess at the first end of the cartridge.

The cracking cap is formed by a disc connected to a ring, where the disc forms the actual closing surface of the cap with an overlap on the wall (edge) of the cartridge, and the ring forms a border (frame) reinforcing the cap around the perimeter and allowing the cap to fit in the cartridge. The outer diameter of the disc is the same as the outer diameter of the cartridge body. The entire cap is made as one piece, preferably from food-grade polypropylene. In the part corresponding to the inner diameter of the cartridge, the disc is provided with a thinning, which is formed by lines of thinning that allow the cap to crack (tear). The purpose of the lines of thinning is to locally weaken the firmness of the cap so that when pressure is applied to the cartridge piston (i.e., the pressure of the ejector piston on the piston of the filled cartridge), the thinned areas will crack and the cap will open. Preferably, the lines of thinning are in the shape of a star. The star-shaped thinning preferably contains 8 rays, but in another embodiment it can contain, for example, only 3 rays, 4 rays (cross thinning) or 6, 10 or 12 rays. The cap is preferably produced in an injection jaw mould that contains the exact desired geometry of the cap, with the lines of thinning created directly when the cap is injected into the mould.

The fitting at the first end of the cap ring fits all the way around the recess in the second end of the cartridge body and holds the cap firmly in the cartridge. The fitting at the first end is preferably wedge-shaped (by its profile) for easier insertion of the cap into the cartridge and includes an edge that abuts the edge of the recess in the cartridge body and prevents the cap from loosening. The rectangular (by its profile) fitting (overlap) at the second end of the ring rests against the edge of the second end of the cartridge after the cap is inserted. After insertion, it seals correctly without additional components (does not contain a rubber seal), that is, it seals directly in contact with the cartridge body, thanks to dimensional compatibility (dimensional overlap) on the diameter of both parts.

When filling the cartridge with the filling mixture, in the first step, a piston is inserted into the body of the cartridge at the first end, which stops at the edge of the recess. This guarantees the exact position of the piston, which guarantees the same volume of filling in the cartridge. After the interior is filled, the other end is closed by the cracking cap. With this, the filling is closed and the filled cartridge is ready for pasteurization (at a temperature of 60-75 °C for 30-120 minutes depending on the type of filling mixture), which guarantees the conservation of the filling for the required time (at least 4 days). After completion of pasteurization, shock cooling to 4 to 6 °C follows. At this temperature, the filled cartridges are kept in a cooling box.

In the simplest case, a filling funnel can be used to fill cartridges, or commercially available food fillers (mechanical, manual, automated), which are known to skilled persons.

The present invention therefore relates to a semi-automatic device for filling rolls with a semi-liquid filling using a cartridge for one portion of the filling, the device comprising a manipulator, a heating unit, a pushing unit, a filling unit, a control unit and a housing, wherein the manipulator comprises an automated drive system for movement in two axes *x, z* and a gripper adapted to grasp a cartridge for one portion of the filling, wherein the manipulator, the heating unit, the pushing unit and the filling unit are arranged in the housing where they are spatially distributed and functionally connected in such a way that it enables coordinated movement, controlled by the control unit, of the cartridge gripped in the gripper between the starting position, the heating unit, the pushing unit and filling unit.

In a preferred embodiment, the heating unit comprises a water bath container for heating the cartridge, a heating element for heating the water bath and a temperature sensor for sensing the temperature of the water bath in the water bath container.

In another preferred embodiment, the pushing unit comprises a stand, on which an ejector piston operated by a motor is placed, wherein the stand with the piston are adapted for a vertical movement of the piston up and down and to and from the filling unit.

In another preferred embodiment, the filling unit comprises a case, where a roll holder is inserted, wherein the case is provided in its upper wall with a filling opening and the roll holder is provided with a roll handle. Preferably, the roll holder is removably inserted into the case, the case comprising a detector of the presence of a roll and a disposing pit for removing the used cartridge.

In another preferred embodiment, the heating unit further contains a case into which the water bath container is removably inserted, while the heating element and the temperature sensor are installed in the case so that they are in contact with at least one wall of the container, and the container is closed with a lid, which is provided with an opening for inserting/extracting the cartridge to/from the water bath in the container. Preferably, an impaling spike in a sleeve that extends into the water bath in the container is installed in the lid of the water bath container.

In another preferred embodiment, the housing comprises a first door for inserting the cartridge, a second door for inserting/removing the water bath container, and a third door for inserting/removing a roll, and optionally removing/inserting a roll holder, wherein the doors are arranged in the front wall of the housing in such a way that when all doors are opened at the same time, one access opening is created.

In another preferred embodiment, the control unit comprises a processor, memory and a communication interface, where the processor is configured at least to receive input data from the memory and/or communication interface, the temperature sensor and the detector of the presence of a roll in the filling unit, and issue instructions for at least the control elements of the manipulator, for moving the gripper in the *xz* plane, closing/opening the jaws of the gripper, moving the piston of the pushing unit and regulating the temperature of the water bath in the water bath container by means of the heating element.

The present invention further relates to a method of filling a roll with a semi-liquid filling by means of a cartridge for one portion of filling, whereby the cartridge for one portion containing one portion of the filling is inserted into the roll, which is provided with a cavity and is placed vertically with the mouth of the cavity at the top in the device for filling the rolls with a semi-liquid filling, with a vertical downward movement and by pressing the piston of the cartridge while pushing the cartridge upwards, the filling is pushed into the cavity of the roll.

The subject-matter of the present invention is a semi-automatic device for filling rolls with a semi-liquid filling, as described and defined here in patent claims 1 to 9. The subject-matter of the present invention is also a method of filling a roll with a semi-liquid filling, as described and defined here in claim 10. Preferred embodiments mentioned in the description can be freely combined.

### Clarification of Drawings

Fig. 1. A schematic representation of a device comprising a manipulator, a heating unit, a pushing unit, a filling unit, installed in a housing. The electrical switchboard and control unit are not shown. The cartridge for one portion of the filling is fixed in the jaws of the manipulator's gripper and is partially immersed in a container with a water bath in the heating unit. A view in the direction of the front wall and the right side wall of the device is shown. The sheathing is removed to show the device components.
Fig. 2. A schematic representation of the device shown on Fig. 1. A view in the direction of the back wall and the left side wall of the device is shown. The sheathing is removed to show the device components.
Fig. 3. A schematic representation of the device shown on Fig. 1 and Fig. 2; the entire housing is removed to show the device components.
Fig. 4. A schematic representation of the device's housing which comprises three doors and a communication interface in the front wall, and the cover of the motor of the pushing unit fixed on the upper wall.
Fig: 5. Detailed representation of the manipulator with the gripper in which the cartridge is attached, located exactly above the opening in the lid of the water bath container in the heating unit. The entire pushing unit has been removed for clarity.
Fig. 6. A detailed representation of the heating unit.
Fig. 7. A detailed representation of the impaling spike in the sleeve.
Fig. 8. A detailed representation of the pushing unit with the piston.
Fig. 9. A detailed representation of the filling unit with the roll holder.
Fig. 10. A schematic representation of a cartridge for one portion of filling.
Fig. 11. A detailed representation of the cartridge body.
Fig. 12. A schematic representation of a cracking cap.
Fig. 13. A detailed representation of the cracking cap.

### Examples of Embodiments of the Invention

### Example 1

### A semi-automatic device for filling rolls

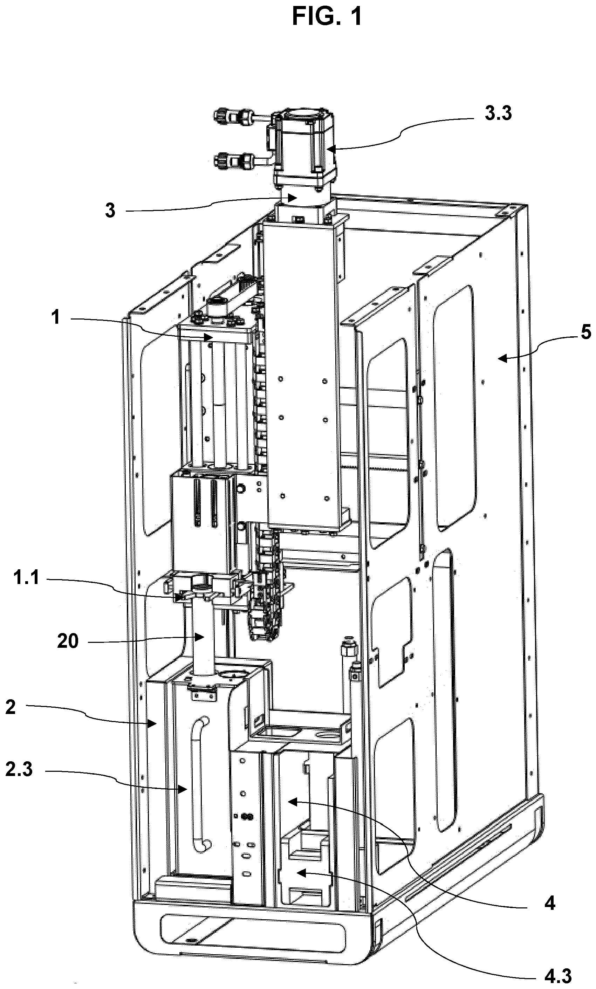

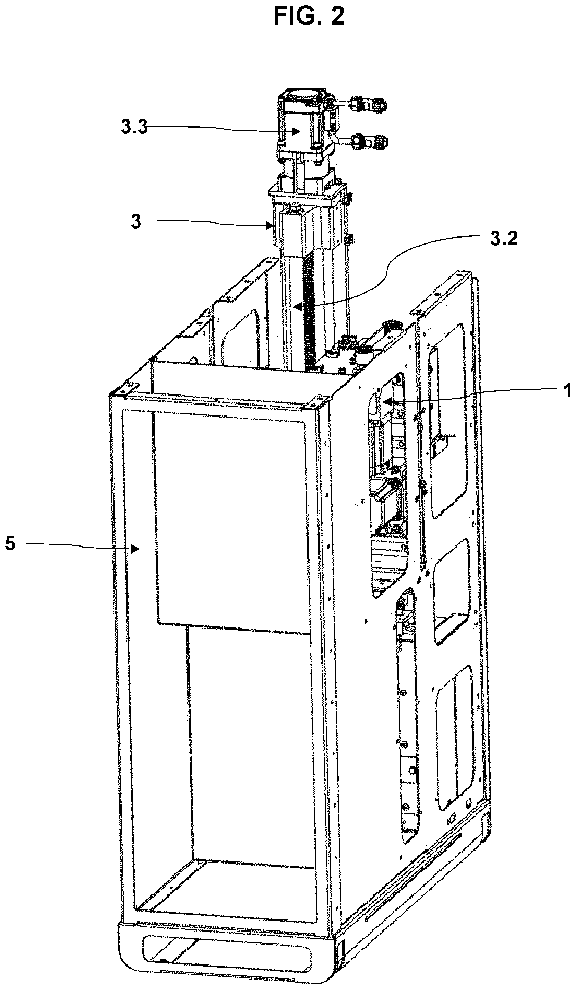

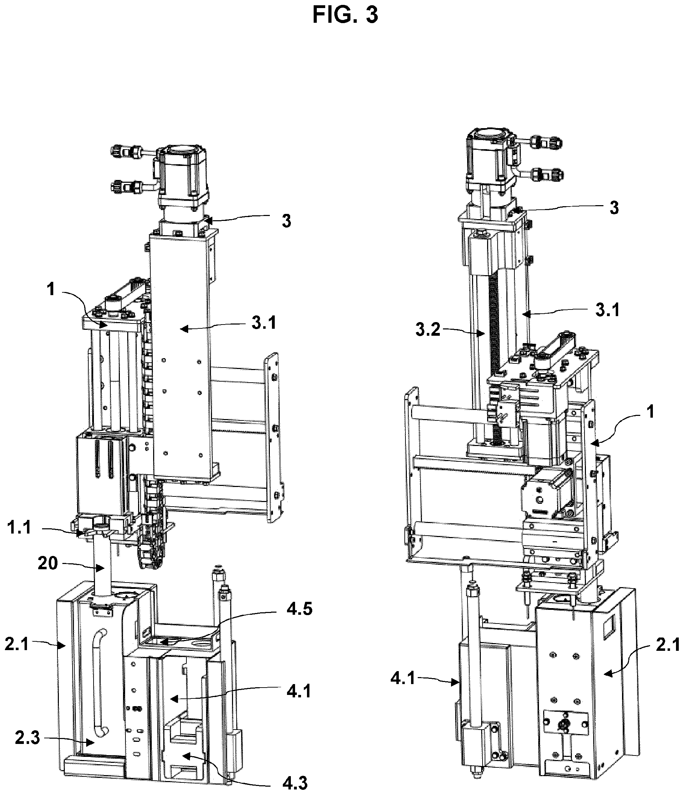

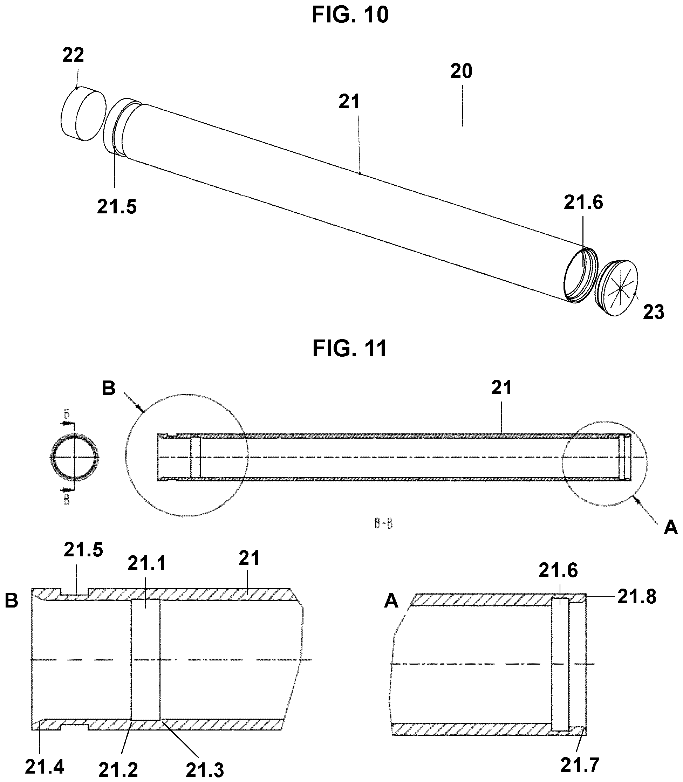

The device for filling rolls according to the present invention is schematically represented on Fig. 1 and Fig. 2. It comprises the basic components, which are a manipulator 1 with a gripper 1.1, a heating unit 2, a pushing unit *3,* a filling unit 4, a control unit and an electrical switchboard (not shown) located in a housing 5. The device is adapted to working with cartridges 20 (see example 2, Fig. 10 to 13) for one portion of filling. The components of the device are functionally arranged in the housing 5 (in Fig. 3, essential components without the housing are shown for clarity). In the front upper part of the housing 5 (when viewed from the front) the manipulator 1 with the gripper 1.1 adapted for gripping the cartridge 20 with jaws is in the initial position at the top left. After inserting the cartridge 20 for filling the roll, the gripper 1.1 moves to the right (movement in the *x* axis) and when filling the roll, it moves up/down (movement in the *z* axis). In the front left part of the housing 5 at the bottom (i.e. under the initial position of the gripper 1.1) the heating unit 2 is located. In the lid of the heating unit 2, the impaling spike 2-6 is installed. To the right of the heating unit 2, the filling unit 4 is located, which is adapted for vertical movement up/down and which contains a retractable roll holder 4-3. Part of the filling unit 4 is a disposing pit4.5 for storing the used cartridges 20. Above the filling unit 4 there is a free handling space into which the gripper 1.1 with the cartridge 20 can be moved. Above this handling space is the pushing unit 1 with the ejector piston 3.2, which is adapted for vertical movement up/down. The components are spatially distributed in the housing 5 and are functionally connected and adapted so that the gripper 1.1 of the manipulator 1 (after inserting the cartridge 20 by the operator) controlled by the control unit inserts the cartridge 20 into the heating unit 2, pulls out (after heating) the cartridge 20 from the heating unit 2 and moves it above the impaling spike 2-6, moves down so that the impaling spike 2-6 impales the cracking lid (to facilitate the opening of the lid during filling) of the cartridge 20, and then moves to the position for filling the roll, i.e. to the position above the toasted roll (which was inserted there before by the operator) in the filling unit 4 (in the holder 4.3 of the roll) and under the piston 3.2 of the pushing unit 3. Subsequently, the piston 3.2 by moving downwards, while simultaneously moving the cartridge 20 (held by the gripper 1,1) upwards, pushes the filling from the cartridge 20 into the roll, and the gripper 1-1 moves the empty cartridge 20 above the disposing pit 4.5, where it is dropped (cartridges 20 are recycled) and returns to the rest position above the heating unit 2. The gripper 1.1 of the manipulator 1 therefore moves only in two axes, horizontal and vertical.

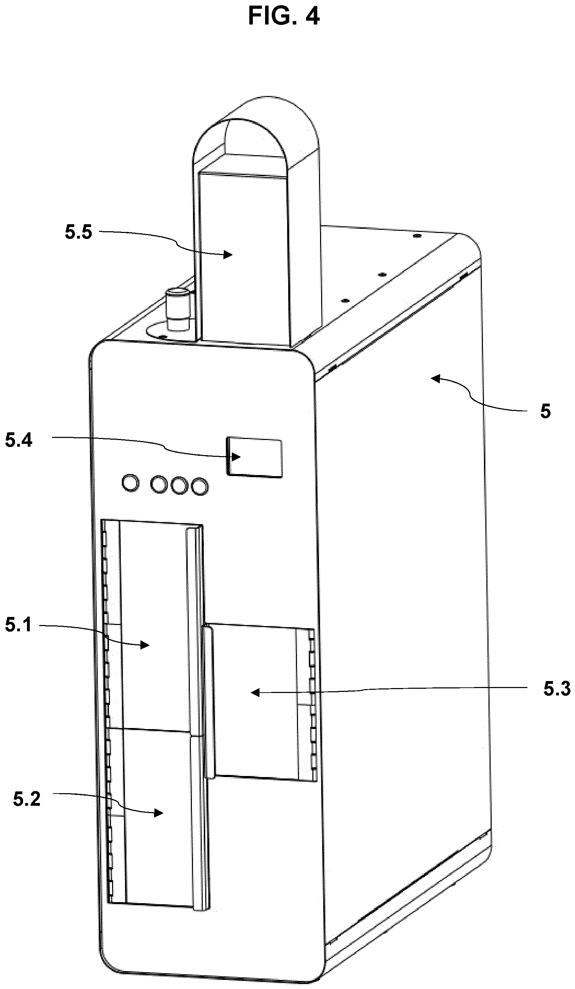

The housing 5 (Fig. 1 and Fig. 4) is a solid self-supporting structure, made of profile and sheet metal elements of stainless steel quality 1.4301 and equipped with suitable mounts for individual components of the device, with removable walls (sheathing). The housing 5 fully encloses all the above components, thus creating a compact device. The front wall of the housing 5 is provided with three doors, the first door 5.1 is for inserting the cartridge 20 into the gripper 1.1 of the manipulator 1, the second door 5.2 for communication with the heating unit 2, i.e. to insert/remove the water bath container 2.3, the third door 5.3 for inserting/removing the roll to/from the holder 4-3. The front wall of the housing 5 is further equipped with a communication interface 5.4 for controlling the device and for the operator to communicate with the control unit, preferably with a touch display, and also contains regulatory elements, such as the main switch, heating time selection, etc. The upper part of the pushing unit 3, containing in particular the motor 3.3, is protected by a cover 5.5 connected to the housing 5.

All movements of the manipulator 1 or gripper 1.1, piston 3.2 and filling unit 4 are controlled by a control unit (not shown) which is located in the rear part of the housing 5 together with the switchboard and connecting cables (not shown).

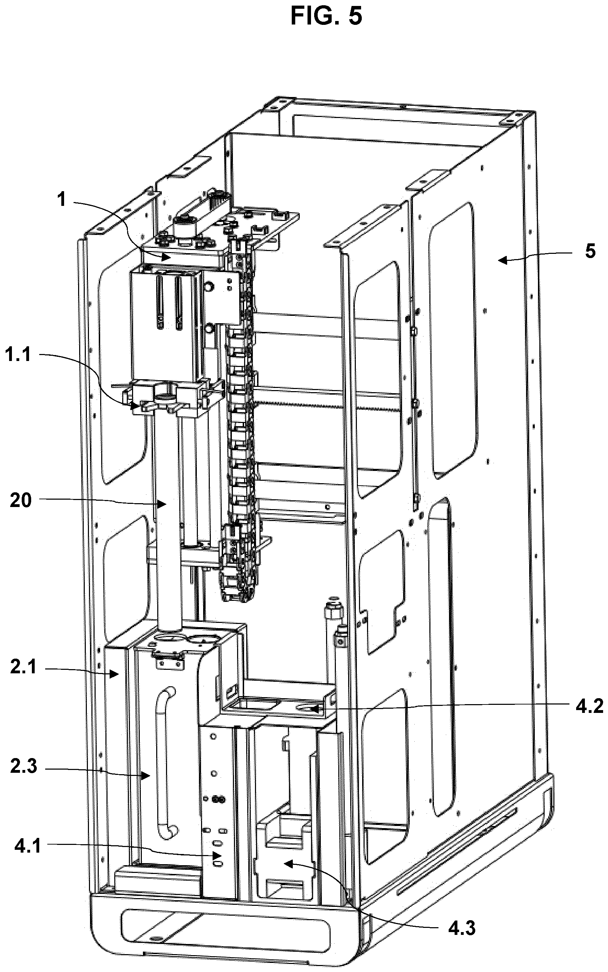

The manipulator 1 (Fig. 5) is an automated two-dimensional *x-z* drive system with a gripper 1.1. The gripper 1.1 is adapted with its jaws to grasp the cartridge 20. The manipulator 1 is controlled by the control program of the control unit for movements: from the initial (rest) position above the heating unit 2, it moves down, moves the cartridge 20 to the heating unit 2, moves the cartridge 20 above the impaling spike 2-6, moves down so that the spike 2-6 disrupts the cracking cap 23 of the cartridge 20, rises and moves more to the right above the filling unit 4 (above the filling opening 4.2 in the upper wall of the case 4.1 of the filling unit 4), then downwards it inserts the cartridge 20 into the filling opening 4.2 of the filling unit 4 and further into the cavity of the roll and then it rises (with the simultaneous downward coordinated movement of the piston 3.2 of the pushing unit 3, the filling is pushed out of the cartridge 20 into the cavity of the roll), then the empty cartridge 20 is moved above the disposing pit 4-5 and the gripper 1.1 releases the cartridge 20, which remains in the pit until it is removed by the operator (in an alternative embodiment, it falls through the disposing opening in the bottom of the housing 5 and falls into the collection container located under the bottom of the device). Finally, the gripper 1.1 moves to the initial position above the heating unit2.

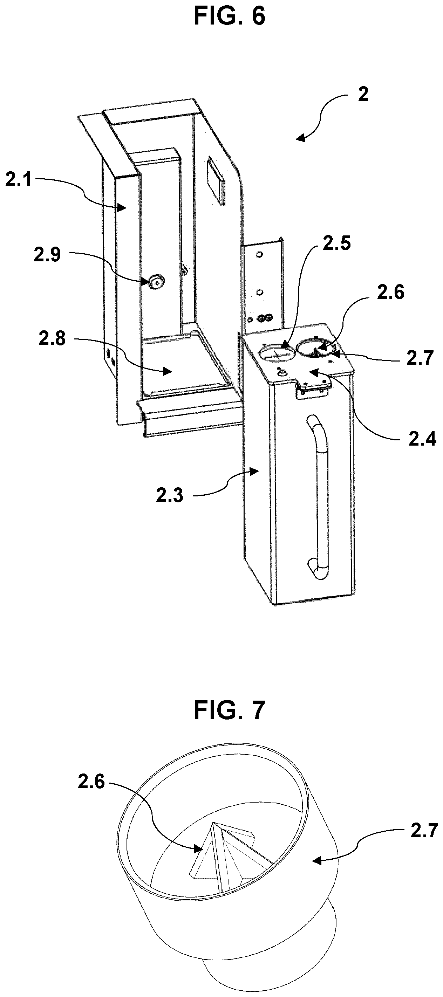

The heating unit 2 (Fig. 6) comprises a case 2.1, a removable water bath container 2.3 where water is heated to a temperature of approximately 95 °C by means of an electric heating element 2-8 in the bottom of the case 2.1. The container 2-3 is closed with a lid 2-4, so that there is as little evaporation of water as possible. The container 2-3 contains an opening 2.5 in the lid 2.4 for inserting a cartridge 20 into the water bath. The opening 2.5 is closed by silicone flaps, which wipe water drops from the surface of the cartridge 20 when the cartridge 20 is pulled out of the bath. A temperature sensor 2.9 is located in the rear wall of the case 2. 1, which is in contact with the back wall of the container 2-3 in its inserted position and is calibrated to measure the temperature of the water bath in container 2.3. The temperature of the bath is controlled by the control unit. In the front wall of the housing 5, there is a second door 5.2, which communicates with the space of the heating unit 2 and allows the insertion/removal of the water bath container 2.3.

An impaling spike 2-6 is installed in the lid 2.4 (see Fig. 6 and 7). It is located in the bottom of the cylindrical case (sleeve) 2.7, which extends into the water bath in the container 2.3, thereby ensuring the heating of the spike 2-6 to the temperature of the water bath (approximately 95 °C). The part of the spike 2.6 that pierces the cracking cap 23 is constructed from two intersecting, mutually perpendicularly oriented isosceles triangles, where the vertices between the arms form the actual tip of the impaling spike 2-6. The sleeve 2.7 with the spike 2-6 is removable from the lid 2-4 to facilitate cleaning. The assembly of the spike 2-6 with the sleeve 2-7 is preferably made of food grade stainless steel, as is the cartridge 20 (see below).

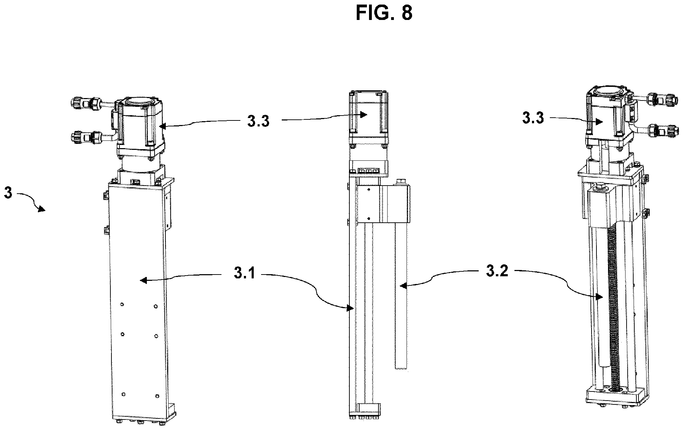

The pushing unit 1 (Fig. 8) is located above the filling unit 4, it comprises a stand 3.1, on which the ejector piston 3.2 is movably fixed, the piston being movable vertically, from the initial (rest) upper position it is moved above the cartridge 20 inserted in the roll in the filling unit 4, it is inserted into the cartridge 20 downwards and the cartridge 20 is simultaneously pulled up by the gripper 1.1 of the manipulator 1, so that the filling from the cartridge 20 is pushed into the roll placed in the filling unit 4. The movement of the piston 3.2 is ensured by the servomotor 3.3, which is located above the upper wall of the housing 5 under the cover 5.5.

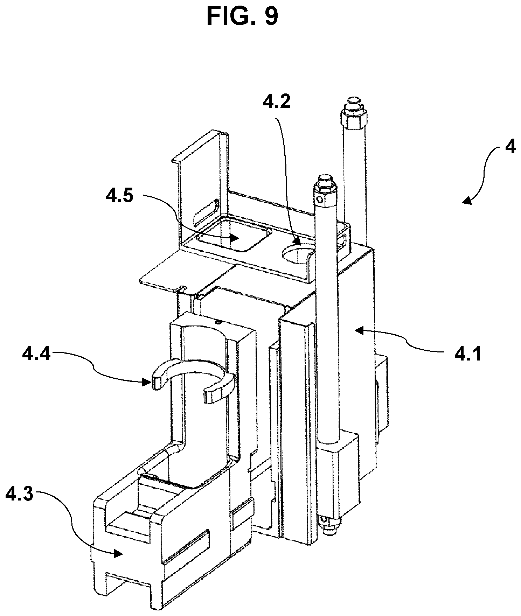

The filling unit 4 (Fig. 9) comprises a case 4.1 with a filling opening 4.2 in its upper wall, a retractable holder 4.3 for placing the prepared roll with a roll handle 4-4, and also a detector of the presence of a roll in place (not shown). The detector is preferably an optical detector, but a number of other possibilities are known to a person skilled in the art. The case 4.1 can move between the upper position for inserting/removing the roll, where it is aligned with the third door 5.3 in the front wall of the housing 5, and the lower position, where filling takes place. The movement of the filling unit 4 is ensured by rodless cylinders and is controlled by the control unit. Inserting the roll after toasting and removing it after filling is ensured by the operator.

Furthermore, a disposing pit 4.5 is advantageously arranged in the case 4.1, into which the cartridge 20 is lowered after the filling has been pushed out. The disposing pit 4.5 can connect to the disposing opening in the bottom of the housing 5, through which the cartridge 20 falls into the collection container located under the bottom of the housing 5. In an alternative embodiment, the disposing pit 4.5 is equipped with a bottom, so that the cartridge 20 remains in it after being thrown away and is removed by the operator via third door 5.3.

The control unit (not shown) comprise a processor, memory and a touch screen 5-4, wherein the processor is configured to receive input data from memory (program instructions) and communication equipment (instructions to start a cycle) and sensors (temperature of the bath in the heating unit 2, detector of the presence of a roll in the filling unit 4), and issue instructions for the control elements (servomotors) of the manipulator 1 (movement in the *x-z* axis, closing/opening of arms of the gripper 1.1), the pushing unit 3 (movement of the piston 3.2 up/down (in the z axis)), the filling unit 4 between the positions for inserting/removing the roll and for filling the roll and for controlling the temperature in the container 2.3 by means of the heating element 2-8 and the temperature sensor 2-9.

The electrical switchboard (not shown) located in the rear part of the housing 5 ensures the connection to the electrical network and the supply of all the electrical components of the device with an electrical current with the necessary power.

### Example 2

### Cartridge for one portion of filling

A preferred embodiment of the cartridge 20 for use in the device according to the invention described in example 1 is schematically represented on Fig. 10. The cartridge comprises three main parts: a body 21, a piston 22 and a cracking cap 23.

The body 21 of the cartridge 20 is a seamless tube from stainless steel certified for use in food industry. The body 21 (see Fig. 11) contains a recess 21.1 at the first end, the recess creating a stopping edge 21.2 for the piston 22. The recess 21.1 continues towards the other end of the cartridge 20 with a gradual recess transition 21.3 to the standard diameter of the inner of the cartridge 20 (i.e. without an edge). The inner end edge 21.4 is bevelled. At this end, a means 21.5 for grasping the cartridge 20 with the gripper 1.1 of the manipulator 1 is also provided on the outer side, the means being an external recess 21.5 in the full outer perimeter of the body 21 of the cartridge 20, the profile of the recess 21.5 being rectangular and dimensionally compatible with the gripper 1.1 of the manipulator 1. At the second end of the cartridge there is a recess 21.6 for the attachment of the cracking cap 23. The inner end edge 21.7 of the second end is slightly bevelled. The outer diameter of the body 21 is 25 mm, the wall thickness is 2 mm, and the inner diameter is 21 mm. The inner volume of the cartridge 20 usable for the filling (i.e. if the piston 22 is inserted into the body 21 and the cap 23 is attached) is 75 ml. The recess 21.1 has a depth of 0.2 mm, the external recess 21.5 has a depth of 1 mm, the recess 21.6 has a depth of 1.3 mm. The modification of the body 21 for inserting the cap 23 in this embodiment consists in creating the recess 21.6 and further in increasing the inner diameter of the body 21 from the recess 21.6 towards the other end of the body 21 to 22 mm.

The piston 22 (see Fig. 10) of the cartridge 20 is a cylinder from food-grade silicone with a diameter of 21.2 mm and a thickness of 15 mm. The piston 22 is inserted into the body 21, where it fits into the recess 21.1. The edge 21.2 of the recess 21.1 has the function of a stopping edge and is sufficient to hold the piston 22 in the recess 21.1 when filling the cartridge 20.

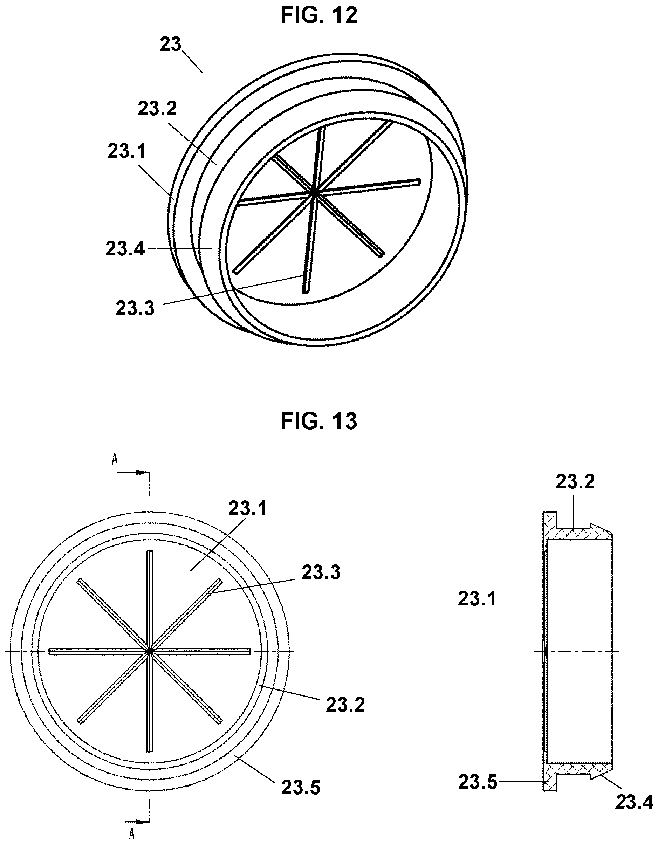

The cracking cap 23 (see Fig. 12 and 13) is formed with a disc 23.1 connected with a ring 23.2, where the disc 23.1 forms the actual closing surface of the cap 23 and the ring 23.2 forms a border (frame) reinforcing the cap 23 around the perimeter and allowing the cap 23 to fit in the body 21 of the cartridge 20. The outer diameter of the disc 23.1 is equal to the outer diameter of the body 21 of the cartridge 20; the outer diameter of the ring 23.2 is equal to the inner diameter of the second end of the body 21 of the cartridge 20. The disc 23.1 is provided with a star-shaped thinning 23.3 in the part corresponding to the inner cross-section of the body 21 of the cartridge 20, the purpose of which is to weaken the firmness of the cap 23 so that when pressure is applied to the piston 22 of the cartridge 20 (i.e. the pressure of the ejector piston 3.2 on the piston 22 of the cartridge 20), the thinned places 23.3 crack and the cap 23 opens. The wedge-shaped (by its profile) fitting 23.4 (sliding edge) at the first end of the ring 23.2 fits into the recess 21.6 at the second end of the body 21 of the cartridge 20 and holds the cap 23 firmly in the body 21 of the cartridge 20. The rectangular (by its profile) fitting 23.5 (overlapping edge) at the second end of the ring 23.2 fits after the insertion of the cap 23 to the edge 21.8 of the second end of the body 21 of the cartridge 20. The entire cap 23 is made as one piece from food-grade polypropylene. In a preferred embodiment, the inner diameter of the disc 23.1 is 25 mm (after fitting the cap 23 to the body 21 of the cartridge 20 the outer edge of the cap 23 exactly matches the peripheral edge of the body 21 of the cartridge 20), the width of the ring 23.2 is 6.2 mm, the outer diameter of the ring 23.2 is 22 mm, the inner diameter being 20 mm, the wedge-shaped fitting 23.4 has the largest outer diameter of 23 mm. After insertion, it seals correctly without additional components (does not contain a rubber seal), that is, the cap 23 seals directly in contact with the body 21 of the cartridge 20, thanks to dimensional overlap on the diameters of both parts. The second end of the body 21 of the cartridge 20 (from the edge of the recess 21.6 outwards), adapted for the fitting of the cap 23, has an inner diameter of 22 mm within the tolerance of 0 to -0.05 and the outer diameter of the ring 23.2 of the cap 23 is 22 mm within the tolerance of 0 to +0,05, which ensures joint overlap and good sealing.

### List of reference numerals

- 1: manipulator
- 1.1: gripper of the manipulator
- 2: heating unit
- 2.1: case of the heating unit
- 2.3: water bath container
- 2.4: lid of the water bath container
- 2.5: opening in the lid
- 2.6: impaling spike
- 2.7: sleeve of the impaling spike
- 2.8: heating element
- 2.9: temperature sensor
- 3: pushing unit
- 3.1: stand of the pushing unit
- 3.2: ejector piston
- 3.3: motor for moving piston
- 4: filling unit
- 4.1: case of the filling unit
- 4.2: filling opening
- 4.3: roll holder (retractable)
- 4.4: roll handle
- 4.5: disposing pit
- 5: housing
- 5.1: first door
- 5.2: second door
- 5.3: third door
- 5.4: communication interface (display)
- 5.5: motor cover
- 20: cartridge for one portion of filling
- 21: cartridge body
- 21.1: recess at the first end
- 21.2: stopping edge
- 21.3: recess transition
- 21.4: inner end edge of the first end
- 21.5: external recess in the cartridge body (means) for grasping the cartridge with gripper
- 21.6: recess at the second end
- 21.7: inner end edge of the second end
- 21.8: end edge of the second end of the cartridge body
- 22: cartridge piston
- 23: cracking cap
- 23.1: cap disc
- 23.2: cap ring
- 23.3: thinning in the cap surface
- 23.4: cap ring first end fitting (sliding edge)
- 23.5: cap ring second end fitting (overlapping edge)

## Claims

1. A semi-automatic device for filling rolls with semi-liquid filling by means of a cartridge (20) for one portion of filling, **characterised in that** it comprises
a manipulator (1), a heating unit (2), a pushing unit (3), a filling unit (4), a control unit and a housing (5);
wherein the manipulator (1) comprises an automated drive system for movement in two axes x, z and a gripper (1.1) adapted to grasp the cartridge (20) for one portion of filling;
wherein the manipulator (1), the heating unit (2), the pushing unit (3) and the filling unit (4) are spatially distributed in the housing (5) and functionally connected in such a way that it enables coordinated movement, controlled by the control unit, of the cartridge (20) gripped in the gripper (1.1) between the starting position, the heating unit (2), the pushing unit (3) and the filling unit (4).

2. The semi-automatic device for filling rolls with semi-liquid filling according to claim 1, **characterised in that** the heating unit (2) comprises a water bath container (2.3) for heating the cartridge (20), a heating element (2.8) for heating the water bath and a temperature sensor (2.9) for sensing the temperature of the water bath in the water bath container (2.3).

3. The semi-automatic device for filling rolls with semi-liquid filling according to claim 1 or 2, **characterised in that** the pushing unit (3) comprises a stand (3.1), on which an ejector piston (3.2) operated by a motor (3.3) is placed, wherein the stand (3.1) with the piston (3.2) are adapted for a vertical movement of the piston (3.2) up and down and to and from the filling unit (4).

4. The semi-automatic device for filling rolls with semi-liquid filling according to any one of claims 1 to 3, **characterised in that** the filling unit (4) comprises a case (4.1), where a roll holder (4.3) is inserted, wherein the case (4.1) is provided in its upper wall with a filling opening (4.2) and the roll holder (4.3) is provided with a roll handle (4.4).

5. The semi-automatic device for filling rolls with semi-liquid filling according to claim 4, **characterised in that** the roll holder (4.3) is removably inserted into the case (4.1), the case (4.1) comprising a detector of the presence of a roll and a disposing pit (4.5) for removing the used cartridge (20).

6. The semi-automatic device for filling rolls with semi-liquid filling according to any one of claims 2 to 5, **characterised in that** the heating unit further contains a case (2.1) into which the water bath container (2.3) is removably inserted, while the heating element (2.8) and the temperature sensor (2.9) are installed in the case (2.1) so that they are in contact with at least one wall of the container (2.3), and the container (2.3) is closed with a lid (2.4), which is provided with an opening (2.5) for inserting/extracting the cartridge (20) to/from the water bath in the container (2.3).

7. The semi-automatic device for filling rolls with semi-liquid filling according to claim 6, **characterised in that** an impaling spike (2.6) in a sleeve (2.7) that extends into the water bath in the container (2.3) is installed in the lid (2.4) of the water bath container (2.3).

8. The semi-automatic device for filling rolls with semi-liquid filling according to any one of claims 1 to 7, **characterised in that** the housing (5) comprises a first door (5.1) for inserting the cartridge (20), a second door (5.2) for inserting/removing the water bath container (2.3), and a third door (5.3) for inserting/removing a roll, and optionally removing/inserting the roll holder (4.3), wherein the doors (5.1, 5.2, 5.3) are arranged in the front wall of the housing (5) in such a way that when all doors (5.1, 5.2, 5.3) are opened at the same time, one access opening is created.

9. The semi-automatic device for filling rolls with semi-liquid filling according to any one of claims 1 to 8, **characterised in that** the control unit comprises a processor, memory and a communication interface (5.4), where the processor is configured at least to receive input data from the memory and/or communication interface (5.4), the temperature sensor (2.9) and the detector of the presence of a roll in the filling unit (4) and issue instructions for at least the control elements of the manipulator (1) for moving the gripper (1.1) in the *xz* plane, closing/opening the jaws of the gripper (1.1), moving the ejector piston (3.2) of the pushing unit (3) and regulating the temperature of the water bath in the water bath container (2.3) by means of the heating element (2.8)

10. Method of filling a roll with a semi-liquid filling by means of a cartridge (20) for one portion of filling, **characterised in that** that the cartridge (20) for one portion of the filling containing one portion of the filling is inserted into the roll, which is provided with a cavity and is placed vertically with the mouth of the cavity at the top in the device for filling the rolls with semi-liquid filling according to any one of claims 1 to 9, with a vertical downward movement and by pressing the piston (22) of the cartridge (20) while pushing the cartridge (20) upwards, the filling is pushed into the cavity of the roll.
